# EUROPEAN PATENT APPLICATION

(11) **EP 2 426 278 A1**
(43) Date of publication of application: **07.03.2012**
(21) Application number: 11178456.7
(22) Date of filing: 23.08.2011
(51) Int. Cl.: E02F 9/08

(54) **Working machine**

(30) Priority: 03.09.2010 JP 2010197623
(71) Applicant: Kobelco Construction Machinery Co. Ltd., Asaminami-ku Hiroshima-shi Hiroshima 731-0138 (JP)
(72) Inventor: Kawamoto, Kenji, Hiroshima-shi,, Hiroshima 731-0138 (JP); Murakami, Yoshiaki, Hiroshima-shi,, Hiroshima 731-0138 (JP); Matsumoto, Toshihisa, Hiroshima-shi,, Hiroshima 731-0138 (JP)
(74) Representative: TBK

(57) **Abstract**

A working machine is provided with a pressing mechanism 40 for pressing a pressing plate 20 toward an upper frame 11, and a restricting mechanism 41 fixed to the upper frame 11 between a fuel tank 15 and the upper frame 11. The fuel tank 15 is pressed toward the upper frame 11 by the pressing mechanism 40 at a bottom surface of the fuel tank 15, whereby a lower recess 32a vertically engageable with at least a part of the restricting mechanism 41 is formed.

## Description

### BACKGROUND OF THE INVENTION

### Field of the Invention

The present invention relates to a working machine such as a hydraulic shovel having a fuel tank made of a synthetic resin.

### Description of the Background Art

Conventionally, there has been known a working machine having a fuel tank made of a synthetic resin.

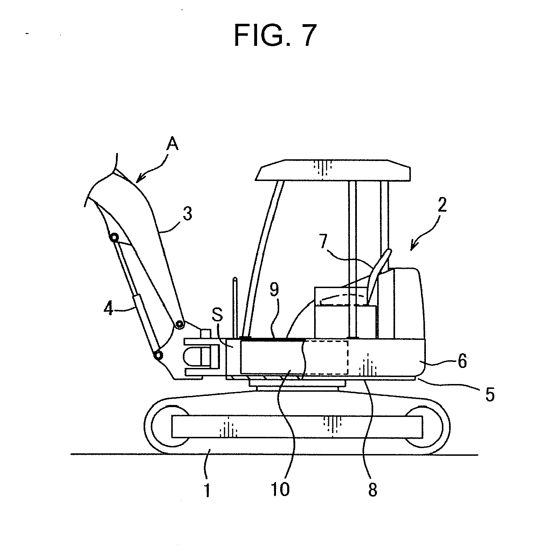

FIG. 7 shows a compact hydraulic shovel called as a mini-shovel, as a reference example of a working machine having a fuel tank made of a synthetic resin.

The hydraulic shovel shown in FIG. 7 is provided with a crawler-type lower propelling body 1, an upper slewing body 2 to be loaded on the lower propelling body 1 to be slewable around an axis extending in a direction perpendicular to the ground, and a working device A attached to the upper slewing body 2. The working device A is provided with a boom 3, a boom cylinder 4 for raising or lowering the boom 3, an unillustrated arm and bucket, and a boom cylinder and an arm cylinder for driving the boom and the arm.

The upper slewing body 2 is provided with an upper frame 5 slewably attached to the lower propelling body 1; devices such as an engine loaded on the upper frame 5; a guard panel 6 for covering the upper frame 5 and the devices; an unillustrated pillar mounted on a bottom plate 8 of the upper frame 5; a floor plate 9 disposed on the bottom plate 8, with a space S being defined between the floor plate 9 and the bottom plate 8 of the upper frame 5 by the pillar; a fuel tank 10 disposed in the space S and for storing fuel therein; and a driver's seat 7 disposed on the floor plate 9.

The fuel tank 10 is made of a synthetic resin. Since the strength of the synthetic resin fuel tank 10 is smaller than that of a metal tank, it is impossible to directly mount the synthetic resin fuel tank 10 on the bottom plate 8 of the upper frame 5 by bolts, unlike the metal tank.

In view of the above, there have been known e.g. the techniques as disclosed in Japanese Unexamined Utility Model Publication No. Hei 5-22342 (hereinafter, called as patent document 1) and Japanese Unexamined Patent Publication No. 2001-90112 (hereinafter, called as patent document 2), as methods for mounting a synthetic resin fuel tank to an upper frame.

The mounting method disclosed in patent document 1 includes the steps of fixing an end of a band member to a bottom plate of an upper frame, winding an intermediate part of the band member around a half peripheral part of the fuel tank from a lateral surface thereof to a top surface thereof, and fastening the band member onto the upper frame at the other end of the band member. With this arrangement, the fuel tank is pressingly fixed onto the bottom plate of the upper frame.

The mounting method disclosed in patent document 2 includes the steps of winding a band member onto a first lateral surface of a fuel tank, opposite to a vertical wall formed on a bottom plate of an upper frame, in a state that a second lateral surface of the fuel tank opposite to the first lateral surface is contacted with the vertical wall; and pressingly contacting the fuel tank with the vertical wall by fastening the band member. With this arrangement, the fuel tank is pressingly fixed onto the vertical wall.

In the mounting methods disclosed in patent documents 1 and 2, a force of holding the fuel tank in a horizontal direction is insufficient. As a result, the fuel tank may be displaced resulting from strong vibrations or impact which is inherently applied to a working machine such as a hydraulic shovel. The force of holding the fuel tank in the horizontal direction may be insufficient for the following two reasons.

The first reason is that, in the mounting methods disclosed in patent documents 1 and 2, the tank is fixed only by a frictional force between the tank and the bottom plate of the upper frame (patent document 1), or only by a frictional force between the tank and the vertical wall (patent document 2).

The second reason is that it is difficult to uniformly transmit the fastening force from the band member to the entirety of the tank, because the tank has a complicated outer shape, with inclusion of a curved surface and a step portion.

### SUMMARY OF THE INVENTION

An object of the invention is to provide a working machine that enables to securely hold a synthetic resin fuel tank with respect to a frame.

In view of the above, the invention is to provide a working machine including a frame; a synthetic resin fuel tank disposed on the frame; a pressing plate placed on a top surface of the fuel tank; a pressing mechanism operable to press the pressing plate toward the frame; and a restricting mechanism fixed to the frame between the fuel tank and the frame, the restricting mechanism adapted to restrict movement of the fuel tank in a horizontal direction with respect to the frame by vertical engagement with a lower recess formed in a bottom surface of the fuel tank when the fuel tank is pressed toward the frame by the pressing mechanism.

With the above arrangement, it is possible to securely hold the synthetic resin fuel tank with respect to the frame.

These and other objects, features and advantages of the present invention will become more apparent upon reading the following detailed description along with the accompanying drawings.

### BRIEF DESCRIPTION OF THE DRAWINGS

FIG. 1 is a schematic plan view of an upper frame of a hydraulic shovel as an example of a working machine embodying the invention.
FIG. 2 is a perspective view enlargedly showing a part of the upper frame shown in FIG. 1.
FIG. 3 is a cross-sectional view taken along the line III-III in FIG. 1.
FIG. 4 is a cross-sectional view taken along the line IV-IV in FIG. 3.
FIG. 5 is an exploded perspective view of a pressing plate and an upper elastic member.
FIG. 6 is a perspective view of an end of the pressing plate, when viewed from below, in a state that the upper elastic member and a rod member are mounted on the pressing plate.
FIG. 7 is a partially cutaway schematic side view of a compact hydraulic shovel to which the invention is applied.

### DESCRIPTION OF THE PREFERRED EMBODIMENTS

In the following, an embodiment of the invention is described referring to the accompanying drawings. The following embodiment is merely an example embodying the invention, and does not limit the technical scope of the invention.

A basic construction of a compact hydraulic shovel as an example of a working machine embodying the invention is substantially the same as that of the compact hydraulic shovel shown in FIG. 7.

Specifically, the hydraulic shovel of the embodiment is provided with a crawler-type lower propelling body 1, an upper slewing body 2 to be loaded on the lower propelling body 1 to be slewable around an axis extending in a direction perpendicular to the ground, and a working device A attached to the upper slewing body 2. The working device A is provided with a boom 3, a boom cylinder 4 for raising or lowering the boom 3, an unillustrated arm and bucket, and a boom cylinder and an arm cylinder for driving the boom and the arm.

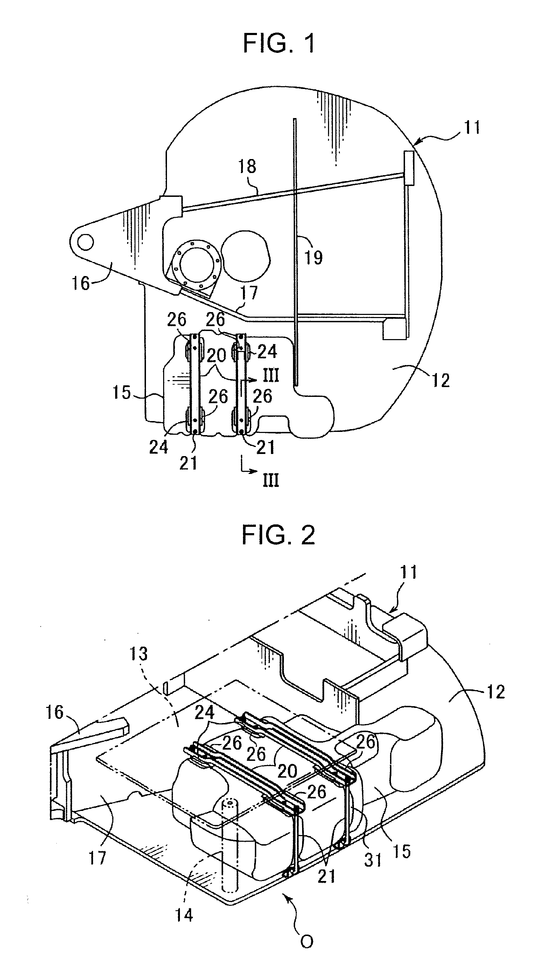

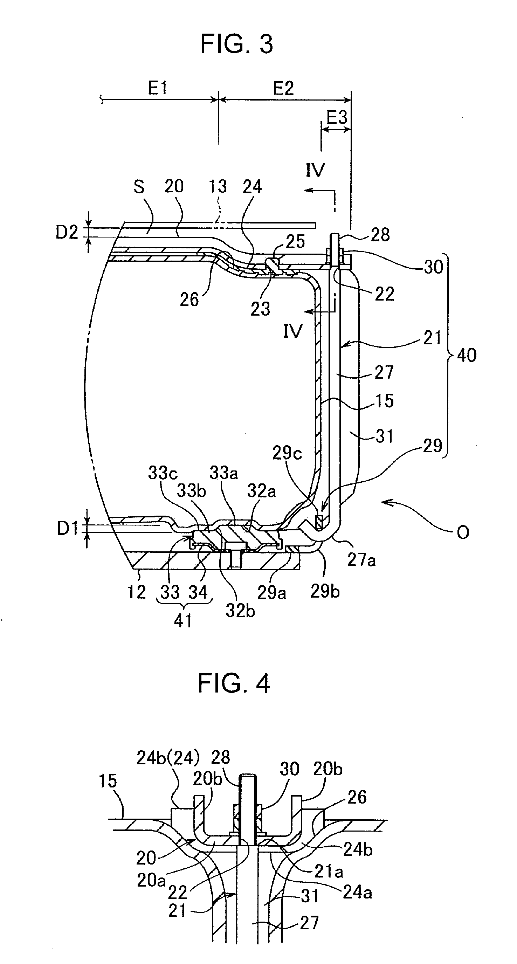

As shown in FIGS. 1 through 3, the upper slewing body 2 of the embodiment is provided with an upper frame 11 slewably attached to the lower propelling body 1; devices (not shown) such as an engine loaded on the upper frame 11; a guard panel (not shown) for covering the upper frame 11 and the devices; pillars 14 (in FIG. 3, only one pillar is shown) extending upright on a bottom plate 12 of the upper frame 11; a floor plate 13 supported on the pillars 14; a synthetic resin fuel tank 15 disposed between the upper frame 11 and the floor plate 13; a pair of front and rear pressing plates 20 disposed on the fuel tank 15; four pressing pads (upper elastic member) 24 disposed between the pressing plates 20 and the fuel tank 15; four pressing mechanisms 40 for pressing the pressing plates 20 toward the upper frame 11; a restricting mechanism 41 (see FIG. 3) fixed to the upper frame 11 and engageable with the fuel tank 15; and a driver's seat (not shown) disposed on the floor plate 13. The following description is made using the viewing directions of an operator seated on the driver's seat, in other words, using the left side in FIG. 1 as the front side of the operator, and the down side in FIG. 1 as the left side of the operator.

The upper frame 11 includes the bottom plate 12 slewably attached to the lower propelling body 1, an attachment bracket 16 attached to a front part of the bottom plate 12, a pair of left and right vertical plates 17, 18 extending upright on the bottom plate 12, and a partition wall 19 extending upright on the bottom plate 12. The paired vertical plates 17, 18 extend in front and rear directions at a center position in left and right directions of the bottom plate 12. The partition wall 19 extends in left and right directions i.e. in a direction substantially orthogonal to the extending direction of the paired vertical plates 17, 18, at a center position in front and rear directions of the bottom plate 12. The engine and the engine-related devices are installed in a space behind the partition wall 19, of the space on the upper frame 11.

The pillars 14 stand on the left side of the front part of the bottom plate 12 of the upper frame 11. The length of the pillar 14 defines the height of a space S between the bottom plate 12, and the floor plate 13 to be described later. Specifically, an upper end of the pillar 14 supports the floor plate 13 from below.

The floor plate 13 is disposed on the left side of the front part of the bottom plate 12 of the upper frame 11. Specifically, the floor plate 13 is disposed on the left of the left-side vertical plate 17 and in a front region of the partition wall 19. Further, the space S for housing the fuel tank 15, and a tank inlet/outlet port O through which the fuel tank 15 is inserted in the space S and extracted from the space S in a lateral direction of the hydraulic shovel are defined between the floor plate 13, and the bottom plate 12 of the upper frame 11. Specifically, the floor plate 13 is disposed above the bottom plate 12 of the upper frame 11 by the provision of the pillars 14, whereby a clearance corresponding to the space S is defined, and the space S is opened leftward. The fuel tank 15 is inserted in the space S and extracted from the space S through the tank inlet/outlet port O.

A main part of the fuel tank 15 is housed in the space S. Specifically, as shown in FIGS. 1, 2, the main part of the fuel tank 15 is disposed on a left-side front part of the bottom plate 12, on the left of the left-side vertical plate 17 and in a front region of the partition wall 19. On the other hand, a rear part of the fuel tank 15 is disposed in a rear region of the partition wall 19. An oil filler pipe having a filler opening at a tip end thereof is attached to a top surface of a rear end of the fuel tank 15. However, since the above arrangement has no direct relation to the invention, the above arrangement is not shown in the drawings.

Four upper recesses 26 for vertical engagement with the pressing plates 20 to be described later are formed in a top surface of the fuel tank 15. Specifically, the front-side two upper recesses 26 of the four upper recesses 26 are formed side by side in left and right directions at the same position in front and rear directions, and the rear-side two upper recesses 26 of the four upper recesses 26 are formed side by side in left and right directions at the same position in front and rear directions.

Four recessed grooves 31 (two recessed grooves are shown in FIG. 2, and one recessed groove is shown in FIG. 3) laterally engageable with rod members 21 to be described later are formed in left and right surfaces of the fuel tank 15. The recessed grooves 31 are respectively indented portions in the left and right surfaces of the fuel tank 15, at positions corresponding to the rod members 21. Specifically, each of the recessed grooves 31 is formed in the entire height range of the fuel tank 15. Further, the front-side two recessed grooves 31 of the four recessed grooves 31 are respectively formed in the left and right surfaces of the fuel tank 15 at the same position as the front-side two upper recesses 26, and the rear-side two recessed grooves 31 of the four recessed grooves 31 are respectively formed in the left and right surfaces of the fuel tank 15 at the same position as the rear-side two upper recesses 26.

A lower recess 32a (see FIG. 3) for vertical engagement with at least a part of the restricting mechanism 41 to be described later is formed in a bottom surface of the fuel tank 15. Specifically, the lower recess 32a is surrounded by a side wall 32b of the fuel tank 15, which is formed along the entire circumference of a vertically extending shaft.

The pressing plates 20 are placed on the top surface of the fuel tank 15 to press the fuel tank 15 toward the bottom plate 12 of the upper frame 11. Specifically, as shown in FIG. 3, each of the pressing plates 20 has a center portion E1 disposed along a part of the top surface of the fuel tank 15, at a position other than the portion where the upper recesses 26 are formed, and a pair of bent portions E2 (one bent portion is shown in FIG. 3) which are bent downward from both ends of the center portion E1 in such a manner as to enter into the respective upper recesses 26. A tip end of each of the bent portions E2 constitutes an attachment portion (second outer attachment portion) E3 to which the pressing mechanism 40 to be described later is detachably attached. Specifically, each of the attachment portions E3 extends to a position on the outside of the top surface of the fuel tank 15 in left and right directions. Each of the attachment portions E3 is further formed with a rod insertion hole 22 vertically passing through the pressing plate 20. Further, the left-side attachment portions E3 are disposed on the left of the tank inlet/outlet port O (i.e. on the left end of the bottom plate 12 and on the left end of the floor plate 13). Further, an attachment hole 23 vertically passing through the pressing plate 20 is formed in a part of each of the bent portions E2, at a position on the inside of the upper recess 26.

Further, as shown in FIG. 4, each of the pressing plates 20 has an upwardly opened U-shape in cross section. Specifically, each of the pressing plates 20 has a web 20a disposed along the top surface of the fuel tank 15, and a pair of flanges 20b rising from front and rear ends of the web 20a. By the formation of the web 20a and the flanges 20b which extend in different directions from each other in cross-sectional shape, the pressing plate 20 has a large resistance against buckling and bending. The rod insertion hole 22 and the attachment hole 23 are formed in the web 20a.

The pressing mechanisms 40 interconnect between the left and right ends of the paired pressing plates 20, and the bottom plate 12 of the upper frame 11 to press the pressing plates 20 toward the upper frame 11. In other words, the four pressing mechanisms 40 are provided respectively at the left and right ends of the paired pressing plates 20.

Specifically, each of the pressing mechanisms 40 has the rod member (interconnecting member) 21, a pair of nuts 30 for interconnecting between an upper part of the rod member 21 and the pressing plate 20, and a rod locking member (locked portion or first outer attachment portion) 29 for interconnecting between a lower part of the rod member 21 and the bottom plate 12. The rod member 21 has a rod-shaped rod body 27, a screw portion 28 formed on an upper end of the rod body 27, and a hook portion (locking portion) 27a formed on a lower end of the rod body 27. The rod body 27 is disposed in the recessed groove 31 formed in a lateral surface of the fuel tank 15. The diameter of the screw portion 28 is set smaller than the diameter of the rod body 27. With this arrangement, the screw portion 28 is operable to be received in the rod insertion hole 22 in the pressing plate 20, but the rod body 27 is inoperable to be received in the rod insertion hole 22. The hook portion 27a is formed by bending a lower end of the rod body 27 upward. The paired nuts 30 are engageable, from above, with the screw portion 28 received into the rod insertion hole 22 of the pressing plate 20 from below. The paired nuts 30 are engaged with the screw portion 28 to suppress loosening of the nuts 30 by e.g. vibrations. The rod locking member 29 includes a fixed portion 29a fixed to the bottom plate 12, a pair of front and rear arm portions 29b which extend from the fixed portion 29a in a direction away from the fuel tank 15 and which is bent upward at a right angle, and a locking bar 29c which is bridged between tip ends of the paired arm portions 29b. As shown in FIG. 3, upward movement of the rod member 21 is restricted by lifting up the rod body 27 in a state that a tip end of the hook portion 27a is passed in a clearance between the paired arm portions 29b. In this state, the nuts 30 are engaged with the screw portion 28 received into the rod insertion hole 22 of the pressing plate 20 from below, whereby the pressing plate 20 is pressed toward the bottom plate 12 (in other words, the pressing plate 20 is pulled). In this arrangement, the rod insertion hole 22 of the pressing plate 20 is operable to receive the screw portion 28, but is inoperable to receive the rod body 27. Thus, further fastening of the nuts 30 is restricted in a state that the pressing plate 20 is contacted with the rod body 27, thereby restricting excessive fastening of the nuts 30.

The left-side two rod locking members 29 (in FIG. 3, one rod locking member is shown) are disposed at such a position that the rod members 21 are attachable from the outside of the tank inlet/outlet port O. Specifically, the fixed portion 29a of the rod locking member 29 is fixed to a left edge of the bottom plate 12. With this arrangement, the paired arm portions 29b extend leftward from the left end of the bottom plate 12, in other words, extend leftward from the tank inlet/outlet port O. The locking bar 29c which is bridged between the paired arm portions 29b is also disposed on the left side (outside) of the tank inlet/outlet port O. As described above, since the attachment portion E3 of the pressing plate 20 is also disposed on the outside of the tank inlet/outlet port O, it is possible to detachably attach the rod member 21 to the attachment portion E3 and to the locking bar 29c at a position on the outside of the tank inlet/outlet port O.

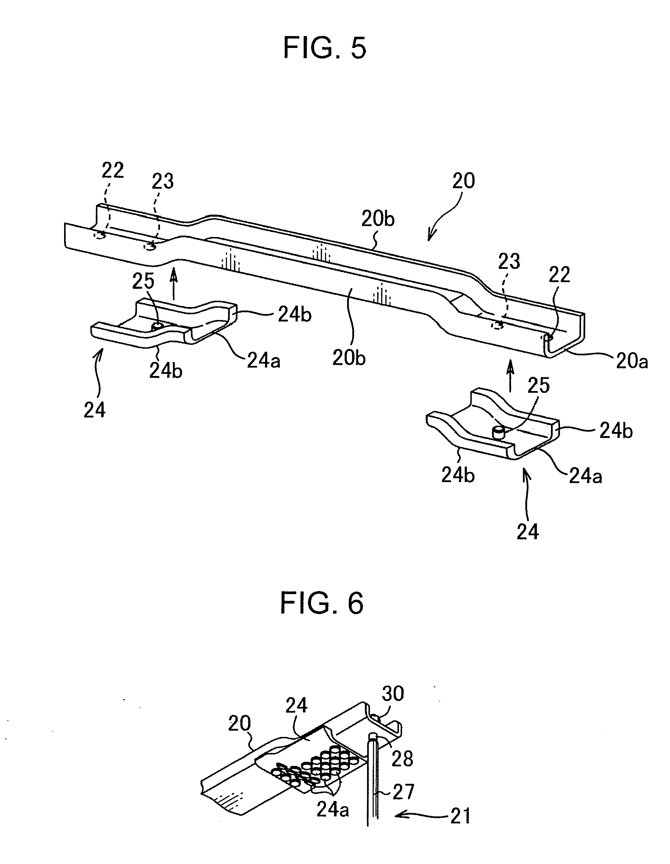

The four pressing pads 24 respectively cover the bent portions E2 (portions to be disposed in the inside of the upper recesses 26) of the pressing plates 20 from the outside (from below), and are held between the bent portions E2 and the top surface of the fuel tank 15. Specifically, as shown in FIG. 4, the pressing pad 24 includes a web disposing portion 24a to be disposed along the web 20a of the pressing plate 20, and a pair of flange disposing portions 24b to be disposed along the flanges 20b, 20b. In other words, the pressing pad 24 has a U-shape in cross section in correspondence to the cross-sectional shape of the pressing plate 20. Further, the pressing pad 24 is engageable with the pressing plate 20. Specifically, the pressing pad 24 has a projection 25 projecting upward from the web disposing portion 24a. Pressingly inserting the projection 25 into the attachment hole 23 of the pressing plate 20 restricts movement of the pressing pad 24 with respect to the pressing plate 20 in the horizontal direction. The pressing pad 24 also functions as a slip stopper for the fuel tank 15. Specifically, the pressing pad 24 is an elastic member made of a material having a large friction coefficient such as rubber, and as shown in FIG. 6, multitudes of dimples 24a (projections and recesses) are formed in a bottom surface of the web disposing portion 24a. With this arrangement, it is possible to enhance the frictional force of the pressing pad 24 with respect to the fuel tank 15.

The restricting mechanism 41 is fixed to the bottom plate 12 at a position between the fuel tank 15, and the bottom plate 12 of the upper frame 11. Further, the restricting mechanism 41 is vertically engaged with the lower recess 32a of the fuel tank 15 by pressing the fuel tank 15 toward the upper frame 11 by the pressing mechanisms 40 to thereby restrict movement of the fuel tank 15 with respect to the upper frame 11 in the horizontal direction. Specifically, the restricting mechanism 41 includes a receiving pad (lower elastic member) 33 engageable with the lower recess 32a of the fuel tank 15, and a fixing member 34 for fixing the receiving pad 33 to the bottom plate 12. The receiving pad 33 has a pad body 33b, and a projection 33a projecting upward from a center part of the pad body 33b. The projection 33a is vertically engaged with the lower recess 32a of the fuel tank 15 in a state that a top surface 33c (contact surface) of the pad body 33b and a top surface of the projection 33a are contacted with the bottom surface of the fuel tank 15. With this arrangement, movement of the fuel tank 15 with respect to the receiving pad 33 in the horizontal direction (namely, in front and rear directions, and in left and right directions) is restricted. The receiving pad 33 also functions as a slip stopper for the fuel tank 15. Specifically, the receiving pad 33 is an elastic member made of a material having a large friction coefficient such as rubber. With this arrangement, slip between the pad body 33b and the fuel tank 15 is prevented by the contact between the top surface 33c of the pad body 33b and the top surface of the projection 33a, and the bottom surface of the fuel tank 15. The fixing member 34 is fixed to the bottom plate 12 while holding the receiving pad 33. Specifically, the fixing member 34 is a metal dish-shaped plate member which is fastened to the bottom plate 12 of the upper frame 11 by bolts. The fixing member 34 is fixed to a bottom surface of the receiving pad 33.

The hydraulic shovel is configured such that pressing the fuel tank 15 toward the bottom plate 12 of the upper frame 11 by the pressing mechanisms 40 realizes vertical engagement between the projections 33a of the restricting mechanism 41 and the lower recess 32a of the fuel tank 15. With this arrangement, it is possible to restrict movement of the fuel tank 15 in the entirety of the horizontal direction, utilizing the pressing force by the pressing mechanisms 40. Further, in this embodiment, pressing the fuel tank 15 toward the bottom plate 12 of the upper frame 11 by the pressing mechanisms 40 realizes vertical engagement between the left and right two bent portions E2 of each of the pressing plates 20 and the upper recesses 26 of the fuel tank 15. Movement of the bent portions E2 in at least one of front and rear directions, and left and right directions is restricted by the side wall of the respective corresponding upper recess 26. In this embodiment, since the left and right two bent portions E2 are simultaneously engaged with the respective upper recesses 26, movement of the pressing plates 20 with respect to the fuel tank 15 is restricted in both of left and right directions. Accordingly, movement of the fuel tank 15 in the entirety of the horizontal direction is also restricted by the engagement between the pressing plates 20 and the fuel tank 15.

In the following, a method for inserting the fuel tank 15 in the space S and extracting the fuel tank 15 from the space S through the tank inlet/outlet port O is described. As shown in FIG. 3, firstly, the pressing mechanisms 40 are detached in a state that the fuel tank 15 is placed in the space S. Specifically, the paired nuts 30 are unfastened from the screw portions 28, and the rod members 21 are moved downward. Then, the screw portions 28 are detached from the rod insertion holes 22 of the pressing plates 20, and the hook portions 27a are disposed below the locking bars 29c. In this state, the rod members 21 are allowed to be taken out through the tank inlet/outlet port O. In this embodiment, the attachment portions E3 of the pressing plates 20 and the rod locking members 29 of the pressing mechanisms 40 are disposed on the outside of the tank inlet/outlet port O. Accordingly, it is possible to release the pressed state of the fuel tank 15 by the pressing plates 20 by manipulation from the outside of the tank inlet/outlet port O.

Next, the engagement between the fuel tank 15 and the restricting mechanism 41 is released. Specifically, the fuel tank 15 is lifted up by a height larger than an overlap size D1 by which the projection 33a of the restricting mechanism 41 is engaged in the lower recess 32a of the fuel tank 15. In this embodiment, there is formed a clearance D2 larger than the overlap size D1, between the top surface of the fuel tank 15 (specifically, the pressing plates 20) and the bottom surface of the floor plate 13. With this arrangement, it is possible to release the engagement between the restricting mechanism 41 and the fuel tank 15 by lifting up the fuel tank 15.

As described above, in this embodiment, a pressing force by the pressing mechanisms 40 is transmitted to the fuel tank 15 via the pressing plates 20, and the restricting mechanism 41 is vertically engaged with the lower recess 32a by a pressing force from the pressing plates 20. With this arrangement, it is possible to securely transmit the vertical pressing force by the pressing mechanisms 40 to the fuel tank 15 via the pressing plates 20, and to utilize the pressing force as a force for retaining the fuel tank 15 with respect to the upper frame 11 in the horizontal direction. Specifically, transmitting a pressing force from the pressing mechanisms 40 to the fuel tank 15 via the pressing plates 20 enables to securely transmit the pressing force to the fuel tank 15, as compared with the conventional art of transmitting a force to a fuel tank via a belt. Further, the engagement between the restricting mechanism 41 and the lower recess 32a utilizing the pressing force to be transmitted from the pressing plates 20 enables to securely restrict movement of the fuel tank 15 with respect to the upper frame 11 in the horizontal direction.

As described above, according to the embodiment, it is possible to securely hold the fuel tank 15 with respect to the upper frame 11 by the vertical pressing force and by the horizontal retaining force.

Further, it is possible to suppress displacement of the fuel tank 15 resulting from strong vibrations or impact.

Furthermore, in this embodiment, vertical engagement between the restricting mechanism 41 and the lower recess 32a allows for the fuel tank 15 to be attached to the upper frame 11 at a specified attachment position. Accordingly, it is possible to easily achieve positioning of the fuel tank 15 with respect to the upper frame 11 by the engagement between the restricting mechanism 41 and the lower recess 32a.

In this embodiment, it is possible to press the pressing plates 20 by disposing the rod members 21 which are not bulged in the horizontal direction along a lateral surface of the fuel tank 15. With this arrangement, it is possible to secure a large size for the fuel tank 15 in a space having a limited size in the horizontal direction, and secure a large tank capacity.

In this embodiment, the rod insertion hole 22 formed in the attachment portion E3 of the pressing plate 20 is operable to receive the screw portion 28 of the rod member 21, and is inoperable to receive the rod body 27. With this arrangement, fastening of the nuts 30 is restricted in a range up to a position where the rod body 27 is contacted with the attachment portion E3 of the pressing plate 20. Thus, it is possible to accurately control the pressing force with respect to the fuel tank 15 by the pressing plates 20, and to prevent deficient fastening of the nuts 30 or excessive fastening of the nuts 30.

In this embodiment, the recessed grooves 31 are formed in a lateral surface of the fuel tank 15, at the positions corresponding to the rod members 21. With this arrangement, it is possible to maximally secure a tank capacity at a portion of the fuel tank 15 other than the portion where the recessed grooves 31 are formed. Further, since the portion of the fuel tank 15 corresponding to the recessed grooves 31 functions as a rib of a side wall of the fuel tank 15, it is possible to enhance the vertical strength of a lateral surface of the fuel tank 15.

In this embodiment, it is possible to release the pressing of the fuel tank 15 by manipulation in the lateral direction in which the tank inlet/outlet port O is opened, and to insert the fuel tank 15 in the space S and extract from the space S through the tank inlet/outlet port O in a state that the pressing of the fuel tank 15 by the pressing mechanisms 40 is released. With this arrangement, it is possible to detachably attach the fuel tank 15 through the tank inlet/outlet port O at a position on the outside of the space S between the upper frame 11 and the floor plate 13.

In this embodiment, it is possible to detachably attach the rod members 21 to the rod locking members 29 and to the attachment portions E3 of the pressing plates 20 at a position on the outside of the tank inlet/outlet port O, and to detachably attach the fuel tank 15 through the tank inlet/outlet port O in a state that the rod members 21 are detached. With this arrangement, it is possible to detachably attach the fuel tank 15 by manipulation in the lateral direction (left side direction) in which the tank inlet/outlet port O is opened.

In this embodiment, there is formed a clearance capable of releasing the engagement between the restricting mechanism 41 and the lower recess 32a, between the top surface of the fuel tank 15 and the floor plate 13. With this arrangement, it is possible to release the engagement between the restricting mechanism 41 and the lower recess 32a by lifting up the fuel tank 15 utilizing the clearance. Thus, it is possible to insert the fuel tank 15 in the space S and extract the fuel tank 15 from the space S through the tank inlet/outlet port O in a state that the engagement is released.

In this embodiment, the restricting mechanism 41 is engaged with the lower recess 32a formed in the bottom surface of the fuel tank 15. With this arrangement, it is possible to restrict movement of the fuel tank 15 in the horizontal direction.

In this embodiment, the lower recess 32a has the side wall 32b which surrounds the lower recess 32a along the entire circumference of a vertically extending shaft. With this arrangement, it is possible to restrict movement of the fuel tank 15 with respect to the upper frame 11 in the horizontal direction by disposing the side wall 32b in such a manner as to surround the periphery of the restricting mechanism 41.

In this embodiment, the receiving pad 33 having a large friction coefficient, and provided with the top surface 33c of the pad body 33b to be contacted with the bottom surface of the fuel tank 15, and the projection 33a engageable with the lower recess 32a is disposed between the fuel tank 15 and the upper frame 11. With this arrangement, it is possible to more securely restrict movement of the fuel tank 15 in the horizontal direction by the frictional force exerted by the contact between the top surface 33c and the bottom surface of the fuel tank 15, and by the retaining force resulting from the engagement between the projection 33a and the lower recess 32a. Further, in this embodiment, since the receiving pad 33 also functions as a shock absorber between the fuel tank 15 and the upper frame 11, it is possible to protect the fuel tank 15 from vibrations or impact, thereby preventing breakage or damage of the fuel tank 15.

In this embodiment, the receiving pad 33 having a function of restricting movement of the fuel tank 15 in the horizontal direction, and a function as a shock absorber is fixed to the fixing member 34 made of a metal. With this arrangement, since movement of the receiving pad 33 with respect to the upper frame 11 is restricted by the fixing member 34, it is possible to securely obtain the respective functions of the receiving pad 33.

In this embodiment, a part (bent portions E2) of the pressing plates 20 is engageable in the upper recesses 26 of the fuel tank 15 from above. With this arrangement, it is also possible to restrict movement of the fuel tank 15 in the horizontal direction by the engagement between the pressing plates 20 and the upper recesses 26.

In this embodiment, the pressing pad 24 having a large friction coefficient is held between the pressing plates 20 and the inner surfaces of the upper recesses 26. With this arrangement, it is possible to more securely restrict movement of the fuel tank 15 in the horizontal direction by the frictional force exerted by the contact between the pressing pad 24, and the fuel tank 15 and the pressing plates 20, and by the retaining force resulting from the engagement between the pressing plates 20 and the upper recesses 26.

In this embodiment, each of the pressing plates 20 has the web 20a and the paired flanges 20b, and the pressing pad 24 is operable to cover the pressing plate 20 from the outside. With this arrangement, since the pressing plate 20 and the pressing pad 24 have a U-shape in cross section, it is possible to enhance the strengths of the pressing plate 20 and the pressing pad 24. Thus, it is possible to securely transmit the pressing force from the pressing mechanisms 40 to the fuel tank 15 via the pressing plates 20 and the pressing pads 24 having high strengths to thereby more securely restrict movement of the fuel tank 15 in the horizontal direction.

In this embodiment, multitudes of the dimples 24a are formed in the pressing pad 24. With this arrangement, it is possible to increase the sliding resistance between the pressing pads 24 and the fuel tank 15. Thus, it is possible to more securely restrict movement of the fuel tank 15 with respect to the pressing plates 20 in the horizontal direction.

In this embodiment, the receiving pads 24 are vertically engageable with the pressing plates 20. With this arrangement, it is possible to restrict relative movement between the receiving pads 24 and the pressing plates 20. Thus, it is possible to more securely restrict movement of the fuel tank 15 with respect to the pressing plates 20 in the horizontal direction.

### (Modifications)

(1) In the embodiment, the top surface of the fuel tank 15 is engaged with the pressing plates 20 (via the pressing pads 24), and the bottom surface of the fuel tank 15 is engaged with the bottom plate 12 (via the receiving pads 33). Alternatively, it is possible to restrict movement of the fuel tank 15 in the horizontal direction at least by the engagement between the bottom surface of the fuel tank 15 and the bottom plate 12.
(2) In the case where the top and bottom surfaces of the fuel tank 15 are engaged with the upper frame 11 and with the pressing plates 20 as described above in the embodiment, movement of the fuel tank 15 may be restricted as follows. For instance, the position of the fuel tank 15 on the lower side of the fuel tank 15 may be restricted in the entirety of the horizontal direction in the same manner as the embodiment, and the position of the fuel tank 15 on the upper side of the fuel tank 15 may be restricted only in left and right directions, or front and rear directions.
   Further alternatively, movement of the fuel tank 15 on the upper side of the fuel tank 15 may be restricted in one of front and rear directions, and left and right directions; and movement of the fuel tank 15 on the lower side of the fuel tank 15 may be restricted in the other one of front and rear directions, and left and right directions.
(3) In the embodiment, the pressing plate 20 is provided at two positions i.e. front and rear positions of the fuel tank 15. Alternatively, the pressing plate 20 may be provided at three or more positions or at only one position, depending on the size of the fuel tank 15.
   In the embodiment, the pressing plate 20 extends on the top surface of the fuel tank 15 along left and right directions, and the pressing plate 20 is fastened by the rod members 21 at left and right ends thereof. Alternatively, for instance, the pressing plate 20 may extend along front and rear directions, and the pressing plate 20 may be fastened by the rod members 21 at front and rear ends thereof, as far as it is possible to secure a space in front and rear regions of the fuel tank 15.
(4) In the embodiment, there has been exemplarily described a case where the fuel tank 15 is installed in the space S between the bottom plate 12 of the upper frame 11, and the floor plate 13 at the left-side front part of the upper frame 11. Alternatively, the installation position of the fuel tank 15 may be modified depending on e.g. the arrangement of the upper frame 11 of the hydraulic shovel or the layout of the devices.

The foregoing embodiment and modifications mainly include the invention having the following features.

A working machine according to an aspect of the invention includes a frame; a synthetic resin fuel tank disposed on the frame; a pressing plate placed on a top surface of the fuel tank; a pressing mechanism operable to press the pressing plate toward the frame; and a restricting mechanism fixed to the frame between the fuel tank and the frame, the restricting mechanism adapted to restrict movement of the fuel tank in a horizontal direction with respect to the frame by the vertical engagement with a lower recess formed in a bottom surface of the fuel tank when the fuel tank is pressed toward the frame by the pressing mechanism.

With the above arrangement, a pressing force from the pressing mechanism is transmitted to the fuel tank via the pressing plate, and movement of the fuel tank with respect to the frame in the horizontal direction is restricted by vertical engagement between the restricting mechanism and the lower recess by the pressing force from the pressing plate. In other words, it is possible to utilize the vertical pressing force by the pressing mechanism as a force for holding the fuel tank with respect to the frame in the horizontal direction, while securely transmitting the vertical pressing force by the pressing mechanism to the fuel tank via the pressing plate. Specifically, transmitting the pressing force from the pressing mechanism to the fuel tank via the pressing plate enables to more securely transmit the pressing force to the fuel tank, as compared with the conventional art of transmitting a force to a fuel tank via a belt. Further, the engagement between the restricting mechanism and the lower recess utilizing the pressing force to be transmitted from the pressing plate enables to securely restrict movement of the fuel tank with respect to the frame in the horizontal direction.

Thus, in the above arrangement, it is possible to securely hold the fuel tank with respect to the frame by the vertical pressing force and by the horizontal retaining force.

Further, it is possible to suppress displacement of the fuel tank resulting from strong vibrations or impact.

Further, according to the invention, the vertical engagement between the restricting mechanism and the lower recess enables to attach the fuel tank to a specified attachment position with respect to the frame. Accordingly, it is possible to easily achieve positioning of the fuel tank with respect to the frame by the engagement between the restricting mechanism and the lower recess.

In the working machine, preferably, the pressing plate may include a placement portion to be placed on the top surface of the fuel tank, and an attachment portion disposed at a position laterally displaced from the top surface of the fuel tank in a state that the placement portion is placed on the top surface of the fuel tank, and the pressing mechanism may include a rod member which interconnects between the attachment portion and the frame, the rod member being disposed along a lateral surface of the fuel tank.

In the above arrangement, it is possible to press the pressing plate by disposing the rod member which is not bulged in the horizontal direction along a lateral surface of the fuel tank. With this arrangement, it is possible to secure a large size for the fuel tank in a space having a limited size in the horizontal direction, and secure a large tank capacity.

In the working machine, preferably, the rod member may include a rod body, a screw portion formed on an upper end of the rod body, and a locking portion formed on a lower end of the rod body, the attachment portion may be formed with an insertion hole which is operable to receive the screw portion of the rod member from below but is inoperable to receive the rod body, and the pressing mechanism may further include a locked portion which is fixed to the frame and is vertically engageable with a locking portion of the rod member, and a nut engageable with the screw portion passing through the insertion hole, with engagement between the locked portion and the locking portion.

In the above arrangement, the insertion hole of the attachment portion is operable to receive the screw portion of the rod member from below but is inoperable to receive the rod body. With this arrangement, fastening of the nut is restricted in a range up to a position where the rod body is contacted with the attachment portion of the pressing plate. Thus, it is possible to accurately control the pressing force by the pressing plate with respect to the fuel tank and to prevent deficient fastening of the nut or excessive fastening of the nut.

In the working machine, preferably, the fuel tank may be formed with a recessed groove which is indented in a lateral surface of the fuel tank, at a position corresponding to the rod member.

In the above arrangement, a recessed groove which is indented in a lateral surface of the fuel tank is formed at a position corresponding to the rod member. With this arrangement, it is possible to maximally secure a tank capacity at a portion other than the recessed groove. Further, since the portion of the fuel tank corresponding to the recessed groove functions as a rib of a side wall of the fuel tank, it is possible to enhance the vertical strength of a lateral surface of the fuel tank.

Preferably, the working machine may further include a plate which is disposed above the frame in such a manner as to define, between the plate and the frame, a space for housing the fuel tank, and a tank inlet/outlet port through which the fuel tank is laterally inserted in the space and extract from the space, wherein the pressing mechanism is operable to release pressing of the fuel tank by the pressing plate in response to manipulation in the lateral direction in which the tank inlet/outlet port is opened, and the fuel tank is operable to be inserted in the space and extract from the space through the tank inlet/outlet port in a state that the pressing of the fuel tank by the pressing mechanism is released.

In the above arrangement, it is possible to release the pressing of the fuel tank by manipulation in the lateral direction in which the tank inlet/outlet port is opened, and to insert the fuel tank in the space and extract from the space through the tank inlet/outlet port in a state that the pressing by the pressing mechanism is released. With this arrangement, it is possible to detachably attach the fuel tank through the tank inlet/outlet port at a position outside of the space between the frame and the plate.

Preferably, the working machine may further include a plate which is disposed above the frame in such a manner as to define, between the plate and the frame, a space for housing the fuel tank, and a tank inlet/outlet port through which the fuel tank is laterally inserted in the space and extract from the space, wherein the pressing mechanism includes an interconnecting member which interconnects between the frame and the pressing plate, and a first outer attachment portion which extends from the frame to the outside of the space through the tank inlet/outlet port, the first outer attachment portion being operable to detachably attach a lower part of the interconnecting member, the pressing plate includes a second outer attachment portion which extends to the outside of the space through the tank inlet/outlet port, the second outer attachment portion being operable to detachably attach an upper part of the interconnecting member, and the fuel tank is operable to be inserted in the space and extracted from the space through the tank inlet/outlet port in a state that the interconnecting member is detached from the first outer attachment portion and from the second outer attachment portion.

In the above arrangement, it is possible to detachably attach the interconnecting member to the first outer attachment portion and to the second outer attachment portion at a position outside of the tank inlet/outlet port, and to insert the fuel tank in the space and extract the fuel tank from the space through the tank inlet/outlet port in a state that the interconnecting member is detached. With this arrangement, it is possible to detachably attach the fuel tank by manipulation in the lateral direction in which the tank inlet/outlet port is opened.

In the working machine, preferably, a clearance capable of releasing the engagement between the restricting mechanism and the lower recess may be defined between the top surface of the fuel tank disposed in the space, and the plate.

In the above arrangement, there is formed a clearance capable of releasing the engagement between the restricting mechanism and the lower recess, between the top surface of the fuel tank and the plate. With this arrangement, it is possible to release the engagement between the restricting mechanism and the lower recess by lifting up the fuel tank utilizing the clearance. Thus, it is possible to insert the fuel tank in the space and extract the fuel tank from the space through the tank inlet/outlet port in a state that the engagement is released.

In the working machine, preferably, the fuel tank may have a side wall which surrounds the lower recess along the entire circumference of a vertically extending shaft.

In the above arrangement, the lower recess has the side wall which surrounds the lower recess along the entire circumference of the vertically extending shaft. With this arrangement, it is possible to restrict movement of the fuel tank with respect to the frame in the entirety of the horizontal direction by disposing the side wall in such a manner as to surround the periphery of the restricting mechanism.

In the working machine, preferably, the restricting mechanism may include a lower elastic member having a contact surface to be contacted with the bottom surface of the fuel tank from below, and a projection engageable in the lower recess in a state that the contact surface is contacted with the bottom surface of the fuel tank.

In the above arrangement, an elastic member (lower elastic member) made of a material having a large friction coefficient, and having a contact surface to be contacted with the bottom surface of the fuel tank and a projection engageable with the lower recess is disposed between the fuel tank and the frame. With this arrangement, it is possible to more securely restrict movement of the fuel tank in the horizontal direction by the frictional force exerted by the contact between the contact surface and the bottom surface of the fuel tank, and by the retaining force resulting from the engagement between the projection and the lower recess. Further, in this arrangement, since the lower elastic member also functions as a shock absorber between the fuel tank and the frame, it is possible to protect the fuel tank from vibrations or impact, thereby preventing breakage or damage of the fuel tank.

In the working machine, preferably, the restricting mechanism may further include a metal fixing member which fixes the lower elastic member to the frame.

In the above arrangement, the lower elastic member having both of the function of restricting movement of the fuel tank in the horizontal direction, and the function as a shock absorber is fixed to the frame by the fixing member made of a metal. With this arrangement, since the movement of the lower elastic member with respect to the frame is restricted by the fixing member, it is possible to securely obtain the respective functions of the lower elastic member.

In the working machine, preferably, the top surface of the fuel tank may be formed with an upper recess in such a manner that at least a part of the pressing plate is engageable with the upper recess from above.

In the above arrangement, at least a part of the pressing plate is engageable with the upper recess of the fuel tank from above. With this arrangement, it is possible to restrict movement of the fuel tank in the horizontal direction by the engagement between the pressing plate and the upper recess.

Preferably, the working machine may further include an upper elastic member which is held between at least a part of the pressing plate and an inner surface of the upper recess.

In the above arrangement, an elastic member (upper elastic member) made of a material having a large friction coefficient is held between the pressing plate and the inner surface of the upper recess. With this arrangement, it is possible to more securely restrict movement of the fuel tank in the horizontal direction by the frictional force exerted by the contact between the upper elastic member, and the fuel tank and the pressing plate, and by the retaining force resulting from the engagement between the pressing plate and the upper recess.

In the working machine, preferably, the pressing plate may include a web which is disposed along the top surface of the fuel tank, and a pair of flanges rising from both ends of the web, and the upper elastic member may be operable to cover the web and the paired flanges from the outside.

In the above arrangement, the pressing plate has the web and the pair of flanges, and the upper elastic member covers the pressing plate from the outside. With this arrangement, it is possible to enhance the rigidities of the pressing plate and the upper elastic member, because the pressing plate and the upper elastic member have a U-shape in cross section. Thus, it is possible to more securely restrict movement of the fuel tank in the horizontal direction by securely transmitting the pressing force from the pressing mechanism to the fuel tank via the pressing plate and the upper elastic member having large rigidities.

In the working machine, preferably, at least a part of a surface of the upper elastic member to be contacted with the fuel tank may be formed with projections and recesses.

In the above arrangement, it is possible to increase the sliding resistance between the upper elastic member and the fuel tank. Thus, it is possible to more securely restrict movement of the fuel tank with respect to the pressing plate in the horizontal direction.

In the working machine, preferably, the upper elastic member and the pressing plate may be vertically engageable with each other.

In the above arrangement, the upper elastic member and the pressing plate are vertically engageable. With this arrangement, relative movement between the upper elastic member and the pressing plate in the horizontal direction is restricted. Thus, it is possible to more securely restrict movement of the fuel tank relative to the pressing plate in the horizontal direction.

This application is based on Japanese Patent Application No. 2010-197623 filed on September 3, 2010, the contents of which are hereby incorporated by reference.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

A working machine is provided with a pressing mechanism 40 for pressing a pressing plate 20 toward an upper frame 11, and a restricting mechanism 41 fixed to the upper frame 11 between a fuel tank 15 and the upper frame 11. The fuel tank 15 is pressed toward the upper frame 11 by the pressing mechanism 40 at a bottom surface of the fuel tank 15, whereby a lower recess 32a vertically engageable with at least a part of the restricting mechanism 41 is formed.

## Claims

1. A working machine, comprising:
a frame;
a synthetic resin fuel tank disposed on the frame;
a pressing plate placed on a top surface of the fuel tank;
a pressing mechanism operable to press the pressing plate toward the frame; and
a restricting mechanism fixed to the frame between the fuel tank and the frame, the restricting mechanism adapted to restrict movement of the fuel tank in a horizontal direction with respect to the frame by vertical engagement with a lower recess formed in a bottom surface of the fuel tank when the fuel tank is pressed toward the frame by the pressing mechanism.

2. The working machine according to Claim 1, wherein
the pressing plate includes a placement portion to be placed on the top surface of the fuel tank, and an attachment portion disposed at a position laterally displaced from the top surface of the fuel tank in a state that the placement portion is placed on the top surface of the fuel tank, and
the pressing mechanism includes a rod member which interconnects between the attachment portion and the frame, the rod member being disposed along a lateral surface of the fuel tank.

3. The working machine according to Claim 2, wherein
the rod member includes a rod body, a screw portion formed on an upper end of the rod body, and a locking portion formed on a lower end of the rod body,
the attachment portion is formed with an insertion hole which is operable to receive the screw portion of the rod member from below but is inoperable to receive the rod body, and
the pressing mechanism further includes a locked portion which is fixed to the frame and is vertically engageable with a locking portion of the rod member, and a nut engageable with the screw portion passing through the insertion hole, with engagement between the locked portion and the locking

4. The working machine according to Claim 2 or 3, wherein
the fuel tank is formed with a recessed groove which is indented in a lateral surface of the fuel tank, at a position corresponding to the rod member.

5. The working machine according to any one of Claims 1 through 4, further comprising:
a plate which is disposed above the frame in such a manner as to define, between the plate and the frame, a space for housing the fuel tank, and a tank inlet/outlet port through which the fuel tank is laterally inserted in the space and extracted from the space, wherein
the pressing mechanism is operable to release pressing of the fuel tank by the pressing plate in response to manipulation in the lateral direction in which the tank inlet/outlet port is opened, and
the fuel tank is operable to be inserted in the space and extracted from the space through the tank inlet/outlet port in a state that the pressing of the fuel tank by the pressing mechanism is released.

6. The working machine according to Claim 1, further comprising:
a plate which is disposed above the frame in such a manner as to define, between the plate and the frame, a space for housing the fuel tank, and a tank inlet/outlet port through which the fuel tank is laterally inserted in the space and extracted from the space, wherein
the pressing mechanism includes an interconnecting member which interconnects between the frame and the pressing plate, and a first outer attachment portion which extends from the frame to the outside of the space through the tank inlet/outlet port, the first outer attachment portion being operable to detachably attach a lower part of the interconnecting member,
the pressing plate includes a second outer attachment portion which extends to the outside of the space through the tank inlet/outlet port, the second outer attachment portion being operable to detachably attach an upper part of the interconnecting member, and
the fuel tank is operable to be inserted in the space and extracted from the space through the tank inlet/outlet port in a state that the interconnecting member is detached from the first outer attachment portion and from the second outer attachment portion.

7. The working machine according to Claim 5 or 6, wherein
a clearance capable of releasing the engagement between the restricting mechanism and the lower recess is defined between the top surface of the fuel tank disposed in the space, and the plate.

8. The working machine according to any one of Claims 1 through 7, wherein
the fuel tank has a side wall which surrounds the lower recess along the entire circumference of a vertically extending shaft.

9. The working machine according to Claim 8, wherein
the restricting mechanism includes a lower elastic member having a contact surface to be contacted with the bottom surface of the fuel tank from below, and a projection engageable in the lower recess in a state that the contact surface is contacted with the bottom surface of the fuel tank.

10. The working machine according to Claim 9, wherein
the restricting mechanism further includes a metal fixing member which fixes the lower elastic member to the frame.

11. The working machine according to any one of Claims 1 through 10, wherein
the top surface of the fuel tank is formed with an upper recess in such a manner that at least a part of the pressing plate is engageable with the upper recess from above.

12. The working machine according to Claim 11, further comprising
an upper elastic member which is held between at least a part of the pressing plate and an inner surface of the upper recess.

13. The working machine according to Claim 12, wherein
the pressing plate includes a web which is disposed along the top surface of the fuel tank, and a pair of flanges rising from both ends of the web, and
the upper elastic member is operable to cover the web and the paired flanges from the outside.

14. The working machine according to Claim 12 or 13, wherein
at least a part of a surface of the upper elastic member to be contacted with the fuel tank is formed with projections and recesses.

15. The working machine according to any one of Claims 12 through 14, wherein
the upper elastic member and the pressing plate are vertically engageable with each other.
